(19) Europäisches Patentamt
European Patent Office
Office européen des brevets

(11) Publication number: **0 219 143 A1**

# (12) EUROPEAN PATENT APPLICATION

(21) Application number: **86201404.0**

(22) Date of filing: **08.08.86**

(51) Int. Cl.[4]: **A01N 47/18**, A01N 47/12, //(A01N47/18,37:40),(A01N47/12,37:40)

(30) Priority: **09.08.85 US 764159**

(43) Date of publication of application: **22.04.87 Bulletin 87/17**

(84) Designated Contracting States: **AT BE CH DE FR GB IT LI NL SE**

(71) Applicant: **STAUFFER CHEMICAL COMPANY**
**Westport Connecticut 06881(US)**

(72) Inventor: **Salmon, Brian N.**
**6 Hawbridge, Capel St. Mary**
**Ipswich Suffolk 1P9 2XW(GB)**

(74) Representative: **Smulders, Theodorus A.H.J. et al**
**Vereenigde Octrooibureaux Nieuwe Parklaan 107**
**NL-2587 BP 's-Gravenhage(NL)**

## (54) Synergistic herbicidal compositions and methods of use.

(57) A synergistic herbicidal composition comprising a mixture of

(a) an herbicidally effective amount of a thiolcarbamate of the formula

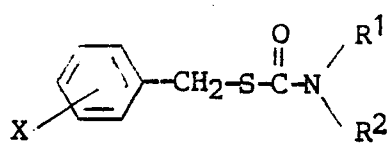

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a benzonitrile of the formula

EP 0 219 143 A1

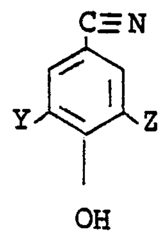

wherein Y is halogen and Z is selected from the group consisting of hydrogen or halogen, or their modified hydroxy equivalents.

# SYNERGISTIC HERBICIDAL COMPOSITIONS AND METHODS OF USE

## Background of the Invention

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

In some cases, active herbicides have been shown to be more effective in combination than when applied individually. The result is often termed "synergism," since the combination demonstrates a potency or activity level exceeding that which it would be expected to have, based on a knowledge of the individual potencies of the components. The present invention resides in the discovery that certain thiolcarbamates and certain substituted benzonitrile compounds, already known individually for their herbicidal potency, display this synergism when applied in combination.

## Prior Art

The two classes of compounds forming the compositions which are the subject of the present invention are independently known in the art for their effects on plant growth.

The first of the two classes, thiolcarbamates, are disclosed as herbicides in U.S. Patent Nos. 3,185,720 (Tilles et al., May 25, 1965), 3,198,786 - (Tilles et al., Aug. 3, 1965), and 2,913,327 (Tilles et al., Nov. 17, 1959).

The substituted benzonitrile compounds forming the second class of compounds in the compositions of the present invention are presently commercially available from various manufacturers, and are described in U.S. Patent 3,397,054 (Hart et al., August 13, 1968).

## Description of the Invention

It has now been discovered that synergism in the control of undesirable vegetation is exhibited by compositions comprising a mixture of the following two components:

(a) an herbicidally effective amount of a thiolcarbamate of the formula

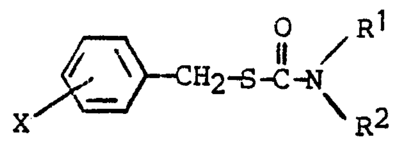

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) a benzonitrile of the formula

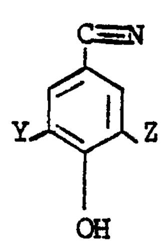

wherein Y is halogen and Z is selected from the group consisting of hydrogen or halogen, or their modified hydroxy equivalents.

The term "alkyl" is used herein to denote both straight-chain and branched-chain groups. Examples of alkyl groups include methyl, ethyl, n-propyl, isopropyl, n-butyl, sec-butyl, isobutyl, etc. All carbon atom ranges are inclusive of their upper and lower limits.

Examples of thiolcarbamates useful in the compositions and method of the present invention are:

1. S-benzyl dipropylthiolcarbamate
2. S-benzyl ethyl, 1,2-dimethylpropylthiolcarbamate
3. S-(2-chlorobenzyl)-N,N-diethylthiolcarbamate
4. S-(4-chlorobenzyl)-N,N-diethylthiolcarbamate

These and other thiolcarbamates within the scope of this invention can be prepared by the procedures described in U.S. Patent Nos. 2,913,327, 3,185,720, and 3,198,786 mentioned above, and U.S. Patents 3,144,475, 2,992,091 and 3,207,775.

The preferred thiolcarbamate for use in the invention is S-benzyl dipropyl thiolcarbamate.

The preferred benzonitrile for use in the compositions and method of the invention is 4-hydroxy-3,5-diiodobenzonitrile. Its common name is ioxynil and it is sold under the tradename TOTRIL®, by the May and Baker Company, Great Britain.

Other benzonitrile compounds, their salts and derivatives, which can also be used are those which are set forth below:

3-chloro-4-hydroxybenzonitrile

3,5-dichloro-4-hydroxybenzonitrile

3-bromo-4-hydroxybenzonitrile

3,5-dibromo-4-hydroxybenzonitrile

3-fluoro-4-hydroxybenzonitrile

3,5-difluoro-4-hydroxybenzonitrile

3-iodo-4-hydroxybenzonitrile

3-iodo-5-t-butyl-4-hydroxybenzonitrile

3,5-diiodo-4-hydroxybenzonitrile

3-bromo-4-hydroxybenzonitrile-acetate

3-bromo-5-t-butyl-4-hydroxybenzonitrile

3,5-diiodo-4-hydroxybenzonitrile-acetate

3-chloro-4-hydroxybenzonitrile-propionate

3-fluoro-4-hydroxybenzonitrile-propionate

3,5-dibromo-4-hydroxybenzonitrile-butyrate

3,5-dichloro-4-hydroxybenzonitrile-butyrate

3-chloro-4-methoxybenzonitrile

3,5-diiodo-4-methoxybenzonitrile

3-iodo-5-t-butyl-4-ethoxybenzonitrile

3-bromo-4-ethoxybenzonitrile

3,5-difluoro-5-ethoxybenzonitrile

3-bromo-4-propoxybenzonitrile

3,5-dibromo-4-isopropoxybenzonitrile

sodium salt of 3,5-diiodo-4-hydroxybenzonitrile

lithium salt of 3,5-diiodo-4-hydroxybenzonitrile

potassium salt of 3-iodo-4-hydroxybenzonitrile

ammonium salt of 3-fluoro-4-hydroxybenzonitrile

trimethylamine salt of 3,5-dibromo-4-hydroxybenzonitrile

monomethylamine salt of 3-bromo-4-hydroxybenzonitrile

diethyl amine salt of 3-iodo-4-hydroxybenzonitrile

propylamine salt of 3,5-dichloro-4-hydroxybenzonitrile

diethyanolamine salt of 3,5-diodo-4-hydroxybenzonitrile

The term "modified-hydroxy equivalents" refers to derivatives of the 4-hydroxybenzonitriles, such as their salts, alkanoyl esters, alkyl ethers, and the like which are known and commonly used expedients in preparing agricultural formulations. These derivatives do not create any difference in kind of herbicidal activity from that shown by the free hydroxybenzonitriles. These hydroxy equivalents do not change the characteristic utility properties of the free hydroxybenzonitriles, but merely facilitate application or formulation of the compounds as useful herbicides by increasing their solubility in vehicles such as oil, water or oil-water emulsions and the like. The hydroxy equivalents facilitate ease of formulation by allowing for greater

dispersibility, contact adherence, spreadability, resistance to weathering, and the like, in the known manner.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which controls or modifies the growth of plants. The term "herbicidally effective amount" is used to indicate the quantity of such a compound or combination of such compounds which is capable of producing a controlling or modifying effect. Controlling or modifying effects include all deviations from natural development, for example: killing, retardation, leaf burn, dwarfing and the like. The term "plants" is used to include all post-emergent vegetation, ranging from seedlings to established vegetation.

In the compositions of this invention, the thiolcarbamate:benzonitrile weight ratio at which the herbicidal response is synergistic lies within the range of about 7.5:1 to about 20:1. The synergism is especially observed when the compositions are used against grasses and broadleaf weeds growing among barley and winter wheat.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The compositions are particularly effective in post-emergence control of _Viola arvensis_, _Galium aparine_ and _Lolium, multiflorum_.

The method of this invention, therefore, comprises applying a herbicidally effective amount of the synergistic compositions of the invention to the locus where control is described.

The synergistic herbicidal activity of the compositions is illustrated in Example I below.

## EXAMPLE I

The herbicidal responses from a combined use of S-benzyl dipropylthiolcarbamate (Compound 1) and 4-hydroxy-3,5-diodobenzonitrile, ioxynil - (Compound 2) were studied by means of a field test.

A series of field test plots were prepared and planted with winter wheat and winter barley. The crops were allowed to grow to the 2-3 leaf stage, and then the test herbicidal compositions were applied at the rate indicated by diluting commercial formulations of the respective herbicides with water and applying at the predetermined rate. The following weed pest species were seeded along side the wheat and barley.

| | | |
|---|---|---|
| _Lolium multiflorum_ | annual ryegrass | (LOLMU) |
| _Avena spp._ | wild oats | (AVESS) |
| _Galium aparine_ | bedstraw | (GALAP) |
| _Viola arvenis_ | field pansy | (VIOAR) |

In addition to the foregoing, the following naturally occurring weed species, which also grew up along side the wheat and barley crop plants, were sprayed with the herbicidal compositions of this invention.

| | | |
|---|---|---|
| _Capsella bursa-pastoris_ | shepherd's purse | (CAPBP) |
| _Stellaria media_ | common chickweed | (STEME) |
| _Matricaria spp._ | mayweed | (MATSS) |
| _Poa annua_ | annual bluegrass | (POAAN) |

Water was used to dilute all the herbicide compositions. The chemical solutions were delivered to the soil or plant surfaces of the weed species by post-emergent application with a tank sprayer. Ratings were made 71 days after treatment.

Herbicide interaction responses were evaluated by use of Colby's formula, Colby, N.R., (1967), "Calculating Synergistic and Antagonistic Responses of Herbicide Combinations," _Weeds_, Vol. 15:20-25, and:

$$E = X + \frac{Y(100 - X)}{100}$$

where E = expected response (E)

where X = observed (O) value of percent growth control when the first herbicide is applied singly; and

where Y = observed (O) value or percent growth control when the second herbicide is applied singly.

The response or relationship interaction from a combined herbicide treatment is synergistic when an observed value is greater than an expected value. A synergistic response is understood to be one in which the interaction response is greater than the sum of responses from the individual chemical treatments. An antagonistic response is the opposite situation. A response is additive when the observed and expected response is equal.

The following table shows the averaged data and results for the tests.

## TABLE I

Crop: Winter wheat (AVALON)
Winter barley (IGRI)

Applied: Post-emergent
Crop Growth Stage: 2-3 leaf

| SPECIES | | | % Weed Control | | | | | | | | | | | | | | | |
|---|---|---|---|---|---|---|---|---|---|---|---|---|---|---|---|---|---|---|
| | | | Planted Species | | | | | | | | Natural Species | | | | | | | |
| | | Rate | LOLMU | | AVESS | | GALAP | | VIOAR | | CAPBP | | STEME | | MATSS | | POAAN | |
| No. | Treatment | (kg ai/ha) | O | E | O | E | O | E | O | E | O | E | O | E | O | E | O | E |
| 1 | untreated | - | 0 | | 0 | | 0 | | 0 | | 0 | | 0 | | 0 | | 0 | |
| 2 | Comp. 1 | 3.0 | 97 | | 67 | | 95 | | 0 | | 99 | | 99 | | 0 | | 99 | |
| | (80% E.C.) | 4.0 | 95 | | 67 | | 95 | | 0 | | 99 | | 100 | | 20 | | 99 | |
| 3 | Comp. 1 | 3.0 + 0.2 | 96 | - | 46 | - | 99 | - | 99 | - | 100 | - | 100 | - | 100 | - | 97 | - |
| | (80% E.C.) | 3.0 + 0.4 | 98 | 97 | 74 | 71.95 | 100 | 99.9 | 100 | 98 | 100 | 100 | 100 | 99.98 | 100 | 100 | 96 | 99.29 |
| | + ioxynil | 4.0 + 0.2 | 97 | 0 | 64 | - | 99 | - | 99 | - | 100 | - | 100 | - | 100 | - | 97 | - |
| | 22.5% E.C.) | 4.0 + 0.4 | 98 | 95 | 41 | 71.95 | 100 | 99.9 | 100 | 98 | 100 | 100 | 100 | 100 | 100 | 100 | 97 | 99.29 |
| | T.M. | | | | | | | | | | | | | | | | | |
| 4 | ioxynil | 0.4 | 0 | | 15 | | 98 | | 98 | | 100 | | 98 | | 100 | | 29 | |
| | (22.5% E.C.) | | | | | | | | | | | | | | | | | |

Comp. 1 = S-benzyl dipropyl thiolcarbamate
E. C. = emulsifiable concentrate (diluted with water for application)
ioyxnil = 4-hydroxy-3,5-diiodobenzonitrile
T.M. = tank mix

The compositions of the present invention show synergistic activity as herbicides in controlling the growth of undesirable vegetation when applied to such vegetation in post-emergence application. The compositions are generally embodied in formulations which contain inert or occasionally

active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

The herbicidal compositions can also be applied to the foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are emulsifiable concentrates which consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the vegetation sought to be controlled in any conventional manner after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

**Claims**

1. A synergistic herbicidal composition comprising a mixture of

(a) an herbicidally effective amount of a thiolcarbamate of the formula

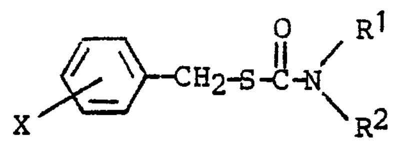

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a benzonitrile of the formula

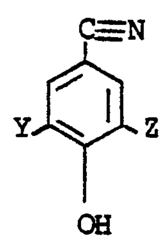

wherein Y is halogen and Z is selected from the group consisting of hydrogen or halogen, or their modified hydroxy equivalents.

2. The composition of Claim 1 wherein (a) is S-benzyl dipropyl thiolcarbamate and (b) is 4-hydroxy-3,5-diiodobenzonitrile.

3. The composition of Claim 1 wherein (a) is S-benzyl ethyl, 1,2-dimethylpropyl thiolcarbamate and (b) is 4-hydroxy-3,5-diiosobenzonitrile.

4. The composition of Claim 1 wherein (a) is S-(2-chlorobenzyl)-N,N-diethyl thiolcarbarmate and -(b) is 4-hydroxy-3,5-diiodobenzonitrile.

5. A method of controlling undesirable vegetation which comprises the post-emergence application to said vegetation of a herbicidal composition comprising a mixture of

(a) an herbicidally effective amount of a thiolcarbamate of the formula

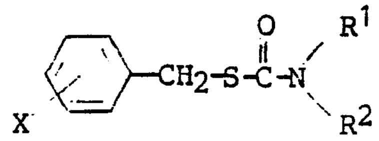

in which

X is hydrogen, chlorine or bromine; and

$R^1$ and $R^2$ are independently selected from the group consisting of $C_1$-$C_6$ alkyl and $C_5$-$C_7$ cycloalkyl, and

(b) an herbicidally effective amount of a benzonitrile of the formula

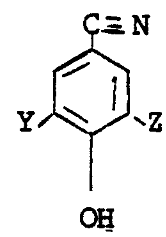

wherein Y is halogen and Z is selected from the group consisting of hydrogen or halogen, or their modified hydroxy equivalents.

6. The method of Claim 5 wherein (a) is S-benzyl dipropyl thiolcarbamate and (b) is 4-hydroxy-3,5-diiodobenzonitrile.

7. The method of Claim 5 wherein (a) is S-benzyl ethyl, 1,2-dimethylpropyl thiolcarbamate and (b) is 4-hydroxy-3,5-diiodobenzonitrile.

8. The method of Claim 5 wherein (a) is S-(2-chlorobenzyl)-N,N-diethyl thiolcarbamate and (b) is 4-hydroxy-3,5-diiodobenzonitrile.

European Patent Office

# EUROPEAN SEARCH REPORT

Application number

EP 86 20 1404

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CENTRAL PATENTS INDEX, Basic Abstracts Journal, section C, AGDOC, week A28, July 1978, abstract no. 50598 A/28, London, GB; & JP-A-78 062 828 (KUMAI CHEM. IND. K.K.) 05-06-1978<br>* Whole abstract *<br>--- | 1-8 | A 01 N 47/18<br>A 01 N 47/12 //<br>(A 01 N 47/18<br>A 01 N 37:40 )<br>(A 01 N 47/12<br>A 01 N 37:40 ) |
| A | US-A-4 380 468 (R.A. FELIX)<br>* Claims *<br>----- | 1-8 | |

| TECHNICAL FIELDS SEARCHED (Int. Cl.4) |
|---|
| A 01 N |

The present search report has been drawn up for all claims

| Place of search | Date of completion of the search | Examiner |
|---|---|---|
| THE HAGUE | 27-11-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document